(19) Europäisches Patentamt
European Patent Office
Office européen des brevets

(11) **EP 4 119 601 A1**

(12) **EUROPEAN PATENT APPLICATION**
published in accordance with Art. 153(4) EPC

(43) Date of publication:
**18.01.2023 Bulletin 2023/03**

(21) Application number: **21776935.5**

(22) Date of filing: **12.03.2021**

(51) International Patent Classification (IPC):
*C08J 5/22* (2006.01)       *B01J 41/13* (2017.01)
*B01J 47/12* (2017.01)      *C02F 1/469* (2006.01)

(52) Cooperative Patent Classification (CPC):
**B01J 41/13; B01J 47/12; C02F 1/469; C08J 5/22;**
Y02E 60/50

(86) International application number:
**PCT/JP2021/010184**

(87) International publication number:
**WO 2021/193161 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **27.03.2020  JP 2020057930**
 **27.03.2020  JP 2020057931**

(71) Applicant: **Astom Corporation**
**Tokyo 105-0003 (JP)**

(72) Inventors:
• **OKAMURA, Takaaki**
  **Shunan- city, Yamaguchi 7458648 (JP)**
• **KISHINO, Masayuki**
  **Shunan- city, Yamaguchi 7458648 (JP)**
• **FUKUTA, Kenji**
  **Shunan- city, Yamaguchi 7458648 (JP)**

(74) Representative: **Germain Maureau**
**12, rue Boileau**
**69006 Lyon (FR)**

(54) **ANION EXCHANGE MEMBRANE AND METHOD FOR PRODUCING SAME**

(57)    An anion-exchange membrane of the present invention includes a substrate made of polyolefin-based woven fabric and an anion-exchange resin, and has an electrical resistance measured using 0.5M NaCl solution at 25°C of 1.0 $\Omega \cdot cm^2$ or more to 2.5 $\Omega \cdot cm^2$ or less, a bursting strength of 0.7 MPa or more to 1.2 MPa or less, a water permeation rate measured using pressured water at 0.1 MPa of 300 ml/($m^2 \cdot$hr) or less, a thickness of the substrate of 90 $\mu$m or more to 160 $\mu$m or less, and an open area ratio of the substrate of 35% or more to 55% or less.

**Description**

TECHNICAL FIELD

The present invention relates to an anion-exchange membrane and a method for producing the same.

BACKGROUND ART

An ion-exchange membrane has a structure where an ion-exchange resin is held by a specific substrate. When the membrane is formed of the ion-exchange resin alone, the strength is low, and a change in form of the membrane due to swelling occurring when the membrane is immersed in a liquid is large. Thus, it is not suitable for practical use. Therefore, the ion-exchange resin held by the substrate which has a predetermined strength, no change in form due to the swelling, and does not impair the ion exchange capacity specific to the ion-exchange resin is used as the ion-exchange membrane.

Typically in such an ion-exchange membrane, woven fabric made of polyvinyl chloride has been widely used as the substrate, but the ion-exchange membrane including polyvinyl chloride as a substrate has a disadvantage of low heat resistance and low chemical resistance. Therefore, an ion-exchange membrane including polyolefin such as polyethylene and polypropylene as a substrate has been widely considered recently.

The ion-exchange membrane including polyolefin as a substrate has extremely high heat resistance and chemical resistance as compared with one including polyvinyl chloride as a substrate, but has poor adhesion between the polyolefin substrate and the ion-exchange resin. This makes it easy for the ion-exchange resin to be detached from the substrate when the ion-exchange membrane is repeatedly swollen and dried (contracted), resulting in a loss of function as a separator, increased water permeability, and reduced current efficiency. Furthermore, poor adhesion between the polyolefin substrate and the ion-exchange resin naturally leads to poor durability.

As means for improving adhesion between the polyolefin substrate and the ion-exchange resin, a technique of subjecting the surface of the polyolefin substrate to electron beam irradiation or corona treatment has been considered generally. Such a technique, however, is difficult to put into practical use, not only because of the large size of the equipment, but also because of the problem of impairing the strength of the polyolefin substrate. When a monomer which is a precursor of the ion-exchange resin is applied to the polyolefin substrate, which is then polymerized, the polymerization temperature is set to be slightly higher than the melting point of polyolefin to partially melt polyolefin, thereby enhancing the adhesion with the ion-exchange resin. However, the strength of the polyolefin substrate is reduced by the melting. Thus, it is necessary to increase the thickness of the substrate to enhance the strength of the substrate. In such a case, the electrical resistance of the ion-exchange membrane increases with the increase in thickness of the substrate, and adhesion decreases over time. For this reason, various means of improving the adhesion have been proposed.

For example, Patent Document 1 proposes an ion-exchange membrane including, as a substrate, woven fabric made of multifilament which is made of polyethylene (so-called ultrahigh-molecular-weight polyethylene) with a weight-average molecular weight of $10^5$ or more. Such an ion-exchange membrane not only improves the strength and the like by the multifilament of the ultrahigh-molecular-weight polyethylene, but also increases the contact area between the ion-exchange resin and the substrate are increased, so that adhesion between them is enhanced.

Patent Document 2 proposes a method of producing an ion-exchange membrane by applying a monomer paste for forming an ion exchange precursor resin containing polyethylene fine particles with a particle diameter of 10 $\mu$m or less to a fabric substrate made of polyethylene, polymerizing the monomer paste at a temperature higher than the melting point of the polyethylene fine particles, and introducing an ion-exchange group to the resultant ion-exchange resin precursor. In the method, polyethylene fine particles function as a thickener. Thus, appropriate viscosity and stringiness are imparted to the monomer paste, and the monomer paste can uniformly adhere to the fabric substrate made of polyethylene. Further, in the resultant ion-exchange membrane, a sea-island structure is formed of polyethylene distributed like a sea and ion-exchange resin distributed like islands, and the polyethylene continuing like the sea thermally fused with the fabric substrate made of polyethylene. Thus, the adhesion with the ion-exchange resin is improved even when the substrate is woven fabric made of monofilament.

CITATION LIST

PATENT DOCUMENTS

Patent Document 1: Japanese Unexamined Patent Publication No. H6-322156

Patent Document 2: Japanese Unexamined Patent Publication No. H3-153740

SUMMARY OF THE INVENTION

TECHNICAL PROBLEM

However, in Patent Document 1, ultrahigh-molecular-weight polyethylene is extremely expensive because it is a special polymer that is difficult to be molded normally, and multifilament woven fabric thereof has very limited availability. Thus, a technique for improving adhesion even with easily available, inexpensive monofilament woven fabric has been desired.

Further, in Patent Document 2, polymerization at high temperatures (105°C in Examples) is required to melt the polyethylene-made fabric substrate, and there is a problem of decrease in mechanical strength of the resultant ion-exchange membrane. In addition, even if high adhesion is obtained once, a gap is formed between the substrate and the ion-exchange resin due to, for example, repeated swelling and contracting of the ion-exchange resin, which causes an increase in water permeability, resulting in low current efficiency. Thus, further improvement in adhesion has been desired.

The present invention was made in view of these points, and intended to provide an anion-exchange membrane which enhances adhesion between the polyolefin-based woven fabric and an anion-exchange resin and achieves both low electrical resistance and high strength.

SOLUTION TO THE PROBLEM

The anion-exchange membrane according to the present invention includes a substrate made of polyolefin-based woven fabric and an anion-exchange resin, and has an electrical resistance measured using 0.5M NaCl solution at 25°C of 1.0 $\Omega\cdot$cm$^2$ or more to 2.5 $\Omega\cdot$cm$^2$ or less, a bursting strength of 0.7 MPa or more to 1.2 MPa or less, a water permeation rate measured using pressured water at 0.1 MPa of 300 ml/(m$^2\cdot$hr) or less, a thickness of the substrate of 90 $\mu$m or more to 160 $\mu$m or less, and an open area ratio of the substrate of 35% or more to 55% or less.

The substrate may be made of polyethylene-based woven fabric.

The substrate may be made of monofilament woven fabric of polyolefin.

The anion-exchange membrane may have a current efficiency measured for sulfate ions of 40% or more. The current efficiency may be measured after energizing a two-chamber cell having a configuration of anode (Pt plate) (1.0 mol/L aqueous sulfuric acid solution)/anion-exchange membrane/(0.25 mol/L aqueous sulfuric acid solution) cathode (Pt plate) and used as an electrolytic cell, for 1 hour at a liquid temperature of 25°C at a current density of 10 A/dm$^2$.

The anion-exchange resin may contain a modified styrene-based thermoplastic resin elastomer modified by a polar group. The polar group may be an acidic group or an acid anhydride group. The acidic group may be a carboxy group, and the acid anhydride group may be a carboxylic acid anhydride group. The modified styrene-based thermoplastic resin elastomer modified by the acidic group or the acid anhydride group may be a modified product obtained by modifying a polystyrene-poly(conjugated diolefin)-polystyrene copolymer or modifying a hydrogenated product thereof by the acidic group. The polystyrene-poly(conjugated diolefin)-polystyrene copolymer may be a polystyrene-polybutadiene-polystyrene copolymer.

The anion-exchange resin may be a polystyrene-based anion-exchange resin.

The anion-exchange resin may have a crosslinked structure.

The method of producing an anion-exchange membrane according to the present invention includes: immersing a polymerizable composition for forming an anion-exchange resin in a substrate made of polyolefin-based woven fabric having a thickness of 90 $\mu$m or more to 160 $\mu$m or less, and an open area ratio of 35% or more to 55% or less, the polymerizable composition containing a polymerization initiator and a monomer component which contains a cross-linkable monomer and a monomer having an anion-exchange group-introducible functional group or an anion-exchange group; and copolymerizing the monomer component at 40°C or more to less than 80°C after the immersing.

The substrate may be made of polyethylene-based woven fabric.

The polymerizable composition for forming the anion-exchange resin may contain the polymerization initiator having a 10-hour half-life decomposition temperature of 90°C or less.

The monomer containing the anion-exchange group-introducible functional group or the anion-exchange group may be a styrene-based monomer containing an anion-exchange group-introducible functional group or an anion-exchange group.

ADVANTAGES OF THE INVENTION

The anion-exchange membrane according to the present invention has a thickness of the substrate of 90 $\mu$m

or more to 160 μm or less and an open area ratio of the substrate of 35% or more to 55% or less, and thus maintains low electrical resistance as a membrane, and has high strength.

DESCRIPTION OF EMBODIMENTS

The following describes embodiments of the present invention in detail. The following description of preferred embodiments is a mere example in nature, and is not intended to limit the present invention or applications or use thereof.

As mentioned in the sections of background art and technical problem, when an anion-exchange membrane including inexpensive polyolefin-based woven fabric as a substrate is produced, it is difficult to keep the strength of the anion-exchange membrane high, the electrical resistance low, and adhesion between the polyolefin-based woven fabric and the anion-exchange resin sufficiently large. Based on this fact, the present inventors have conducted various studies, and arrived at the invention of the present application.

(First Embodiment)

The anion-exchange membrane according to the first embodiment includes: a substrate made of polyolefin-based woven fabric; and an anion-exchange resin, and has an electrical resistance measured using 0.5M NaCl solution at 25°C of 1.0 $\Omega \cdot cm^2$ or more to 2.5 $\Omega \cdot cm^2$ or less, a bursting strength of 0.7 MPa or more to 1.2 MPa or less, a water permeation rate measured using pressured water at 0.1 MPa of 300 ml/(m$^2 \cdot$hr) or less, a thickness of the substrate of 90 μm or more to 160 μm or less, and an open area ratio of the substrate of 35% or more to 55% or less.

In the anion-exchange membrane of the first embodiment having the properties, the electrical resistance is small in the range of 1.0 $\Omega \cdot cm^2$ or more to 2.5 $\Omega \cdot cm^2$ or less, so that electrodialysis and the like can be efficiently performed. The electrical resistance is more preferably in a range of 1.3 $\Omega \cdot cm^2$ or more to 2.3 $\Omega \cdot cm^2$ or less.

In the anion-exchange membrane according to the present embodiment, the bursting strength is preferably in a range of 0.8 MPa or more to 1.1 MPa or less. In the anion-exchange membrane according to the present embodiment, the water permeation rate measured using pressured water at 0.1 MPa is 300 ml/(m$^2 \cdot$hr) or less, which is small, and the anion-exchange membrane thus has excellent anion selectivity and anion concentration performance. The water permeation rate is more preferably 50 ml/(m$^2 \cdot$hr) or less. The lower limit of the water permeation rate is 0 ml/(m$^2 \cdot$hr).

The method of measuring the electrical resistance is as follows. The anion-exchange membrane was sandwiched between two chambers of a two-chamber cell having platinum black electrodes, both sides of the anion-exchange membrane were filled with an aqueous 0.5 mol/L-NaCl solution, the resistance between the electrodes at 25°C was measured by an AC bridge (frequency: 1000 cycles/sec), and the electrical resistance = the membrane resistance ($\Omega \cdot cm^2$) was determined from the difference between the inter-electrode resistance and a resistance between electrodes without the anion-exchange membrane. The anion-exchange membrane used in this measurement was equilibrated in advance in the aqueous 0.5 mol/L-NaCl solution.

The method of measuring the bursting strength is as follows. The anion-exchange membrane was immersed in an aqueous 0.5 mol/l-NaCl solution for 4 hours, and then washed sufficiently with ion-exchange water. Subsequently, the bursting strength of the membrane was, without drying the membrane, measured by a mullen burst tester (manufactured by Toyo Seiki Seisaku-sho, Ltd.) in accordance with JIS-P8112.

The method of measuring the water permeation rate is as follows. The ion-exchange membrane was placed in a cylindrical cell, 50 ml water was put in an upper portion of the cell, and pressure was applied from above at 0.1 MPa. The amount Wpw of water permeating through the ion-exchange membrane per hour was measured, and the water permeation rate was calculated by the following equation. The effective area of the membrane was 12.6 cm$^2$. The measurement was performed at 25°C.

$$\text{Water permeation rate } (ml/(m^2 \times hr)) = Wpw/(S \times t)$$

In the equation, S represents the effective area (m$^2$) of the membrane, and t represents the testing time (hour).

The method of measuring the open area ratio of the substrate is as follows. The open area ratio was calculated by the following equation using the fiber diameter (μm) and the mesh count of threads constituting the substrate.

$$\text{Open area ratio } (\%) = (\text{Opening})^2/(\text{Opening} + \text{Fiber diameter})^2$$

In the equation, the opening (μm) is represented by 25400/mesh count - fiber diameter (μm), and the mesh count is the number of threads per inch. The numerical value 25400 comes from the fact that 1 inch corresponds to 25400 μm.

In the anion-exchange membrane according to the present embodiment, the current efficiency measured for sulfate ions is preferably 40% or more. The measurement is performed after energizing a two-chamber cell having a configuration of anode (Pt plate) (1.0 mol/L aqueous sulfuric acid solution)/anion-exchange membrane/(0.25 mol/L aqueous sulfuric acid solution) cathode (Pt plate) and used as an electrolytic cell, for 1 hour at a liquid temperature of 25°C at a current density of 10 A/dm$^2$.

<Polyolefin-based Woven Fabric>

Examples of polyolefin include a homopolymer of $\alpha$-olefin such as ethylene, propylene, 1-butene, and 4-methyl-1-pentene, and random or block copolymers thereof. Specific examples thereof include low-density polyethylene, high-density polyethylene, polypropylene, poly1-butene, and poly4-methyl-1-pentene. The polyolefin is preferably low-density polyethylene, high-density polyethylene, or polypropylene among them, most preferably a polyethylene-based polymer such as low-density polyethylene and high-density polyethylene in terms of availability and chemical resistance.

The polyolefin-made substrate may be in any form such as woven fabric, nonwoven fabric, or a porous film, but is preferably woven fabric in terms of strength. The open area ratio of the woven fabric needs to be 35% or more to 55% or less. As the open area ratio of the woven fabric decreases, the electrical resistance decreases. In contrast, as the open area ratio increases, the bursting strength decreases, and adhesion between the polyolefin-based substrate and the anion-exchange resin decreases, resulting in deterioration of water permeability. When the open area ratio is 35% or more to 55% or less, the anion-exchange membrane has excellent electrical resistance and excellent adhesion. The open area ratio is more preferably 40% or more to 50% or less.

As a single yarn of the woven fabric, either a multifilament or a monofilament can be used, but the monofilament is preferable in terms of adhesion. In terms of balancing the strength and the membrane resistance, the thickness of the polyolefin-based woven fabric needs to be 90 $\mu$m or more to 160 $\mu$m or less, preferably 95 $\mu$m or more to 140 $\mu$m or less. The fiber diameter of the single yarn is preferably 1 denier to 70 denier (10 $\mu$m to 100 $\mu$m).

<Anion-Exchange Resin>

The anion-exchange resin which forms an anion-exchange membrane is well known one and is, for example, one obtained by introducing an anion-exchange group into resin which forms a skeleton. Examples of the resin which forms a skeleton include hydrocarbon-based resin such as a polymer obtained by polymerizing a monomer having an unsaturated double bond based on ethylene such as vinyl, styrene, and acryl, and copolymers thereof, and a polymer having an aromatic ring in a main chain such as polysulfone, polyphenylene sulfide, polyether ketone, polyether ether ketone, polyetherimide, polyphenylene oxide, polyether sulfone, and polybenzimidazole. The resin which forms a skeleton is preferably a styrene-based anion-exchange resin mainly containing a styrene-based monomer.

It is suitable that these anion-exchange resins have a crosslinked structure because the crosslinked structure densifies the resins, and enhance the swelling prevention property, the membrane strength, and the like. The crosslinked structure may be an ionically crosslinked structure, but is suitably a covalently crosslinked structure.

The anion-exchange group is not particularly limited as long as it is a reactive group capable of being positively charged in an aqueous solution. Examples of the anion-exchange group include primary to tertiary amino groups, a quaternary ammonium group, a pyridyl group, an imidazole group, and a quaternary pyridinium group. The anion-exchange group is generally suitably a quaternary ammonium group or a quaternary pyridinium group which is a strongly basic group.

<Method of Producing Anion-Exchange Membrane>

The anion-exchange membrane according to the present embodiment is produced as follows.

A polymerizable curable component for forming an anion-exchange resin, such as a monomer containing an anion-exchange group, a cross-linkable monomer, and a polymerization initiator is blended, thereby preparing a polymerizable composition. The polymerizable composition is immersed in polyolefin-made woven fabric which is a substrate to fill voids of the woven fabric, and then polymerized and cured, thereby producing an anion-exchange resin. Accordingly, an intended anion-exchange membrane can be obtained.

The polymerization curing temperature is set to be lower than the melting point of the polyolefin-based woven fabric so as not to reduce the strength of the substrate. Although it depends on the types of the polyolefin and the polymerizable curable component and the polymerization curing time, the upper limit of the polymerization curing temperature is preferably a temperature 40°C or more lower than the melting point of the polyolefin configuring the substrate. Specifically, the polymerization curing temperature is preferably 40°C or more to less than 80°C, more preferably 55°C or more to less than 77°C. Polymerization performed at excessively low temperatures causes voids at the interfaces between the polyolefin-based woven fabric and the anion-exchange resin. This may lead to a reduction in current efficiency. On the other hand, polymerization performed at excessively high temperatures partially melts polyolefin. This may lead to a reduction in strength of the resultant anion-exchange membrane.

In the polymerizable curable component, a monomer containing an anion-exchange group may be a commonly used one for producing an anion-exchange resin. Examples thereof include aromatic ammonium-based monomers such as vinylbenzyl trimethylammonium and vinylbenzyl triethylammonium, (meth)acrylic acid derivative-based monomers having a quaternary ammonium group such as 2-(meth)acryloyloxy ethyl trimethylammonium chloride and 2-(meth)acryloyloxy ethyl triethylammonium chloride, nitrogen-containing heterocyclic monomers such as vinylpyridine and vinylimidazole, and salts and esters thereof. These monomers may be used alone or in combination of two or more kinds which are copolymerizable with each other. The cross-linkable monomer is used for densifying the anion-exchange resin and enhancing swelling prevention properties, membrane strength, and the like, and is not particularly limited, but examples thereof include divinyl compounds such as divinylbenzene, divinylsulfone, butadiene, chloroprene, divinylbiphenyl, trivinylbenzenes, vinylnaphthalene, diallylamine, and divinylpyridines. Among them, divinylbenzene is preferred. Such a cross-linkable monomer is blended generally in a content of preferably 0.1 mass% to 50 mass%, more preferably 1 mass% to 40 mass% relative to the entire monomer component contained in the polymerizable composition for forming the anion-exchange resin.

In addition to the monomer containing the anion-exchange group and the cross-linkable monomer described above, other monomers which can be polymerized with these monomers may further be added if necessary. Examples of the other monomers include styrene, chloromethyl styrene, acrylonitrile, methylstyrene, ethylvinylbenzene, acrolein, methylvinylketone, and vinylbiphenyl. The amount of the other monomers blended varies depending on the purpose of addition, but is generally preferably 0.1 mass% to 60 mass%, and preferably 1 mass% to 50 mass%, particularly preferably 5 mass% to 40 mass% especially in a case where flexibility is imparted, relative to the entire monomer component contained in the polymerizable composition for forming the anion-exchange resin.

As the polymerization initiator, known ones can be used without particular limitations, but the polymerization initiator has a 10-hour half-life decomposition temperature of preferably 90°C or less, more preferably 80°C or less. Specifically, the polymerization initiator used includes organic peroxides such as 1,1-bis(t-hexylperoxy)cyclohexane, dibenzoyl peroxide, t-butyl peroxy-2-ethylhexanoate, t-hexyl peroxy-2-ethylhexanoate, 2,5-2,5-di(2-ethylhexanoylperoxy)hexane, disuccinic acid peroxide, 1,1,3,3-tetramethylbutyl peroxy-2-ethylhexanoate, dilauroyl peroxide, di(3,3,5-trimethylhexanoyl)peroxide, t-butyl peroxypivalate, t-hexyl peroxypivalate, t-butyl peroxyneodecanoate, t-hexyl peroxyneodecanoate, and di(2-ethylhexyl)peroxydicarbonate, 1,1,3,3-tetramethylbutyl peroxyneodecanoate. The amount of the polymerization initiator blended in the polymerizable composition for forming the anion-exchange resin is preferably 0.1 parts by mass to 20 parts by mass, more preferably 0.5 parts by mass to 10 parts by mass relative to 100 parts by mass of the monomer component.

The polymerizable composition may further contain an additive made of thermoplastic resin. Specifically, the thermoplastic resin includes polyolefins such as polyethylene and polypropylene, a styrene-butadiene copolymer and a hydrogenated product and a modified product thereof, polyacrylonitriles, a butadiene-acrylonitrile copolymer and hydrogenated product and a modified product thereof, a styrene-ethylene-butadiene copolymer and a modified product thereof, a styrene-isoprene copolymer and a modified product thereof, chlorinated polyethylene, and polyvinyl chloride. Among them, the thermoplastic resins which are elastomers are preferably added, and styrene-based thermoplastic resin elastomers are particularly preferably added. Among the styrene-based thermoplastic resin elastomers, an elastomer modified by a polar group is most suitable. The thermoplastic resin has a tensile elastic modulus measured in accordance with ISO527 of preferably 0.01 MPa or more, more preferably 0.1 MPa or more to 1000 MPa or less. Although not particularly limited thereto, the amount of the thermoplastic resin blended is preferably 0.5 parts by mass or more to 50 parts by mass or less relative to 100 parts by mass of the monomer component contained in the polymerizable composition for forming the anion-exchange resin.

The styrene-based thermoplastic resin elastomer is thermoplastic, elastomeric resin made of a copolymer of a monomer unit derived from an aliphatic hydrocarbon-based monomer and a monomer unit based on a styrene-based monomer. In the styrene-based thermoplastic resin elastomer, a styrene-based monomer unit moiety has high affinity for the anion-exchange resin (specifically, polystyrene-based anion-exchange resin), and an aliphatic hydrocarbon-based monomer unit moiety has high affinity for the polyolefin-based substrate. Thus, the styrene-based thermoplastic resin elastomer serves to improve adhesion between the anion-exchange resin and the polyolefin-based substrate. The modified styrene-based thermoplastic resin elastomer has higher polarity than that of an unmodified styrene-based thermoplastic resin elastomer, and further improves adhesion with the ion-exchange resin.

Such a styrene-based thermoplastic resin elastomer may be a styrene-ethylenebutylene copolymer, a styrene-ethylene-propylene copolymer, or the like, but in general, a copolymer of styrene and a conjugated diolefin such as butadiene or isoprene is suitably used in terms of ease of polymerization and the like.

In the copolymer of the aliphatic hydrocarbon-based monomer unit and the styrene-based monomer unit, the content of each constituent unit is not particularly limited, but in consideration of compatibility with a monomer having a functional group suitable for introduction of an anion-exchange group, flexibility of the resultant copolymer, and the like, the content of the styrene-based monomer unit is preferably 10 mass% to 80 mass% relative to the entire mass of the copolymer. The content of the aliphatic hydrocarbon-based monomer unit is preferably 90 mass% to 20 mass% relative to the entire mass of the copolymer.

As the aliphatic hydrocarbon-based monomer unit, the conjugated diolefin is generally used, but an aliphatic hydrocarbon-based monomer having an ethylenically unsaturated double bond such as ethylene, propylene, butylene, and pentene, having the same chemical structure as the conjugated diolefin after hydrogenation may also be used. When the conjugated diolefin is used, a moiety thereof may be an aliphatic hydrocarbon-based monomer having an ethylenically unsaturated double bond such as ethylene and propylene, and the content thereof is suitably 30 parts by mass or less, more suitably 10 parts by mass or less relative to 100 parts by mass of the conjugated diolefin.

The copolymerization may be of any type, such as a so-called A-B diblock type, an A-B-A triblock type, or a random type. The copolymerization may be of preferably a block type, particularly preferably an A-B-A triblock type of a styrene-based monomer unit A and an aliphatic hydrocarbon-based monomer unit B, in order to achieve a higher effect of improving the affinity of the styrene-based monomer unit moiety and the conjugated diolefin monomer unit moiety such as butadiene or isoprene for the anion-exchange resin and a higher affinity improvement effect of the aliphatic hydrocarbon-based monomer unit moiety for the polyolefin-based substrate.

The polar group includes a hydroxy group, an alkoxy group, a carbonyl group, an epoxy group, a carboxy group, an acidic group, an ester group, an amide group, an acid anhydride group, an amino group, and a halogen group, and is preferably an acidic group or an acid anhydride group in terms of the magnitude of polarity and the affinity for the anion-exchange group. The acidic group includes a sulfo group, a phospho group, and a carboxy group and is not particularly limited, but is preferably a carboxy group. On the other hand, the acid anhydride group is preferably a group obtained by anhydrifying the carboxy group. Specifically, when the acid anhydride group is a cyclic acid anhydride group, it includes a maleic anhydride group, a phthalic anhydride group, a succinic anhydride group, a glutaric anhydride group, and the like, and when the acid anhydride group is an acyclic acid anhydride group, it includes an acetic anhydride group, a propionic anhydride group, a benzoic anhydride group, and the like. The group which most suitably causes modification is a maleic anhydride group. The degree of modification of the styrene-based thermoplastic resin elastomer by the polar group is not particularly limited, and is 0.1 mass% to 20 mass%, preferably 0.2 mass% to 10 mass%, more preferably 0.2 mass% to 5 mass% relative to the polymer.

The polymerizable composition may further contain a thickener, known additives, and the like, if necessary.

The thickener includes: saturated aliphatic hydrocarbon-based polymers such as a polyolefin powder with an average particle diameter of 10 μm or less, an ethylene-propylene copolymer, and polybutylene; and styrene-based polymers such as a styrene-butadiene copolymer. The use of such a thickener allows adjustment of the viscosity in the range where dripping can be effectively prevented during formation of the membrane.

The additives include plasticizers such as dioctyl phthalate, dibutyl phthalate, tributyl phosphate, styrene oxide, acetyl tributyl citrate, and an alcohol ester of fatty acid or aromatic acid, and hydrochloric acid scavengers such as styrene oxide and ethylene glycol diglycidyl ether. The amount of the additives blended in the polymerizable composition for forming the anion-exchange resin varies depending on the purpose of addition, but is 0.1 parts by mass to 50 parts by mass, particularly preferably 0.5 parts by mass to 30 parts by mass relative to 100 parts by mass of the monomer component.

The method of impregnating voids of the substrate which is polyolefin-based woven fabric with the polymerizable composition is not particularly limited. For example, the impregnation is performed by immersing the polyolefin-based substrate in the polymerizable composition filled in a tank. As a matter of course, the impregnation with the polymerizable composition may be performed by other methods such as spray application and application with a doctor blade instead of immersing.

The polymerizable composition in which the polyolefin-based woven fabric is impregnated is heated, copolymerized, and cured in a polymerizer such as a heating oven.

In the polymerizing, a method of sandwiching the polyolefin-based woven fabric filled with the polymerizable composition between films such as polyester and heating the resultant from room temperature under pressure is employed in general. The pressurization is performed generally at a pressure of about 0.1 MPa to about 1.0 MPa with an inert gas such as nitrogen gas, a roll, or the like. By this pressurization, the polymerization is performed with excessive polymerizable composition at the outer interface of the polyolefin-based woven fabric pushed into voids of the polyolefin-based woven fabric, whereby a resin pool is effectively reduced.

Other polymerization conditions depend on the type and the like of the polymerizable curable component, and can be determined by selecting from known conditions, as appropriate. The polymerization temperature is, as mentioned above, set to be significantly lower than the melting point of the polyolefin-based woven fabric (specifically, 40°C or more to less than 80°C), and the polymerization time varies depending on the polymerization temperature and the like, but is generally about 3 hours to about 20 hours. Upon completion of the polymerization and curing, an anion-exchange membrane supported by the polyolefin-based woven fabric is obtained.

In the present embodiment, an anion-exchange membrane can be formed by using the polymerizable curable component for forming an anion-exchange resin precursor resin containing an anion-exchange group-introducible reactive group in place of the polymerizable curable component for forming the anion-exchange resin. Specifically, in place of the monomer containing the anion-exchange group, a monomer containing an anion-exchange group-introducible reactive group is blended to the polymerizable composition to produce an anion-exchange membrane precursor. In this case, the anion-exchange membrane precursor may be produced in the same manner as in the case of blending the monomer containing the anion-exchange group except that the anion-exchange group introduction to be described below is additionally performed.

The monomer containing the anion-exchange group-introducible reactive group may be commonly used one in order to produce the anion-exchange resin. Suitable examples thereof include vinylpyridine, methylvinylpyridine, ethylvinylpyridine, vinylpyrrolidone, vinylcarbazole, vinylimidazole, aminostyrene, alkylaminostyrene, dialkylaminostyrene, trialkylaminostyrene, chloromethylstyrene, acrylic acid amide, acrylamide, oxime, styrene, and vinyltoluene. These monomers may be used alone or in combination of two or more kinds which are copolymerizable with each other.

In addition to the monomer containing the anion-exchange group-introducible reactive group and a cross-linkable monomer, other monomers may be used if necessary. The other monomers include acrylonitrile, acrolein, methylvinylketone, and the like.

The anion-exchange group introduction is performed after the polymerizable composition has been polymerized and cured to obtain a membrane of the anion-exchange resin precursor resin. In the introduction, in order to introduce primary to tertiary amino groups, a quaternary ammonium group, a pyridyl group, an imidazole group, a quaternary pyridinium group, and the like, an anion-exchange group is introduced by causing primary to tertiary amines and the like as an anion-exchange group introduction agent to act on the resultant precursor resin or subjecting the resultant precursor resin to a treatment such as alkylation and amination. Accordingly, an intended anion-exchange membrane can be obtained.

In the present embodiment, in place of the method using the polymerizable composition for forming the anion-exchange resin or the anion-exchange resin precursor resin, voids of the polyolefin-based woven fabric may be filled with an anion-exchange group-containing polymer solution obtained by dissolving an anion-exchange group-containing polymer in a solvent.

The anion-exchange membrane produced as described above has a thickness suitably in a range of 100 $\mu$m to 300 $\mu$m. If the thickness is too small, the strength of the anion-exchange membrane may be greatly reduced. If the thickness is too large, a disadvantage such as an increase in electrical resistance may occur.

The filament diameter and the thickness of the polyolefin-based woven fabric, the amount of the cross-linkable monomer blended in the polymerizable curable component, and the like are adjusted so that the anion-exchange membrane has a bursting strength of 0.7 MPa or more to 1.2 MPa or less although depending on the thickness.

In the anion-exchange membrane according to the present embodiment, polyolefin-based woven fabric is used as the substrate, the electrical resistance is 1.0 $\Omega \cdot$cm$^2$ or more to 2.5 $\Omega \cdot$cm$^2$ or less, the bursting strength is 0.7 MPa or more to 1.2 MPa or less, and the water permeation rate measured using pressured water at 0.1 MPa is 300 ml/(m$^2 \cdot$hr) or less. That is, the anion-exchange membrane according to the present embodiment includes polyolefin-based woven fabric which is thin and has a large open area ratio as a substrate, and has properties of having a sufficiently large bursting strength, a small electrical resistance, and a small water permeation rate which is an indicator of the adhesion between the anion-exchange resin and the substrate. The small water permeation rate means a small amount of gaps generated during manufacturing processes of the anion-exchange membrane or when a certain pressure is applied during measurement of the water permeation rate. Thus, the small water permeation rate means that the anion-exchange resin tightly adheres to the polyolefin-based woven fabric. Accordingly, in the anion-exchange membrane of the present embodiment, the substrate and an anion exchanger filled in voids of the substrate tightly adhere to each other, and as a result, durability is excellent, the electrical resistance is small, and the current efficiency when the anion-exchange membrane is subjected to electrodialysis or the like is high. The copolymerization of monomers to obtain an anion-exchange resin is performed at a temperature lower than the melting point of polyolefin which is a substrate. Thus, the strength of the polyolefin-based woven fabric does not decrease by the copolymerization.

The anion-exchange membrane of the present invention with such properties can be effectively used in many fields such as electrodialysis membranes used in desalinating in the field of salt production or food, electrolyte membranes of fuel cells, and diffusion dialysis membranes used for acid recovery from acid containing metal ions generated in the iron and steel industry.

(Examples)

The following shows Examples and Comparative Examples. Various characteristics of polyolefin-based woven fabric and anion-exchange membrane were measured by the following methods.

1. Open Area Ratio of Polyolefin-based Woven Fabric

The open area ratio was calculated by the following equation using the fiber diameter ($\mu$m) and the mesh count of the polyolefin-based woven fabric.

$$\text{Open area ratio (\%)} = (\text{Opening})^2/(\text{Opening} + \text{Fiber diameter})^2 \text{ (1)}$$

In the equation (1),

Opening ($\mu$m) = 25400/Mesh count - Fiber diameter ($\mu$m); and
Mesh count = Number of threads per inch (average value).

2. Water Permeation Rate of Anion-Exchange Membrane

The anion-exchange membrane was sandwiched between cylindrical cells, 50 ml water was put in the upper cell, and pressure was applied from above at 0.1 MPa. The amount Wpw of water permeating through the ion-exchange membrane per hour was measured, and the water permeation rate was calculated by the following equation. The effective area of the membrane was 12.6 cm$^2$.

$$\text{Water permeation rate (ml/(m}^2 \times \text{hour)))} = \text{Wpw}/(S \times t) \text{ (2)}$$

In the equation (2),

S: Effective area (m$^2$) of membrane; and
t: Testing time.

In Examples 6 to 8, a high-temperature (80°C) accelerated test of the water permeation rate for evaluating the adhesion of the anion-exchange membrane was performed. Specifically, part of the anion-exchange membrane was immersed in pure water at 80°C for 24 hours to be subjected to high-temperature treatment, and the water permeation rate was measured using the high-temperature treated anion-exchange membrane.

The water permeation rate is preferably 300 ml/(m$^2 \times$ hr) or less, more preferably 50 ml/(m$^2 \times$ hr) or less. The lower limit of the water permeation rate is 0 ml/(m$^2 \times$ hr).

3. Anion-Exchange Capacity and Water Content

The anion-exchange membrane was immersed in an aqueous 1 mol/L-HCl solution for 10 hours or more. Thereafter, counter ions were replaced from chloride ions with nitrate ions by an aqueous 1 mol/L-NaNO$_3$ solution, and the released chloride ions (Amol) were quantitatively determined by a potentiometric titrator (AT-710, manufactured by KYOTO ELECTRONICS MANUFACTURING CO., LTD.) using an aqueous silver nitrate solution.

Subsequently, the same anion-exchange membrane was immersed in the aqueous 1 mol/l-NaCl solution for 4 hours or more, and then washed sufficiently with ion-exchange water. Thereafter, moisture on the surface of the anion-exchange membrane was wiped off with tissue paper, and the mass (Wg) of the wet membrane was measured. Further, the membrane was dried under reduced pressure at 60°C for 5 hours, and the dry weight (Dg) thereof was measured. Based on the measured values, the anion-exchange capacity and the water content of the anion-exchange membrane were determined by the following equations.

$$\text{Anion-exchange capacity [meq/g-dry mass]} = A \times 1000/D$$

$$\text{Water content [\%]} = 100 \times (W - D)/D$$

4. Thickness of Anion-Exchange Membrane

The anion-exchange membrane was immersed in an aqueous 0.5 mol/l-NaCl solution for 4 hours, moisture on the surface of the membrane was then wiped off with tissue paper, and the thickness of the anion-exchange membrane was measured with a micrometer (MDE-25PJ, manufactured by Mitutoyo Corporation).

5. Electrical Resistance of Anion-Exchange Membrane

The anion-exchange membrane was sandwiched between two chambers of a two-chamber cell having platinum black electrodes, both sides of the anion-exchange membrane were filled with an aqueous 0.5 mol/L-NaCl solution, the resistance between the electrodes at 25°C was measured by an AC bridge (frequency: 1000 cycles/sec), and the electrical resistance ($\Omega \cdot cm^2$) was determined from the difference between the inter-electrode resistance and a resistance between electrodes without ion-exchange membrane. The anion-exchange membrane used in this measurement was equilibrated in advance in the aqueous 0.5 mol/L-NaCl solution.

In the anion-exchange membrane, the electrical resistance is preferably 4.0 $\Omega \cdot cm^2$ or less, and advantageously 1.0 $\Omega \cdot cm^2$ or more to 3.0 $\Omega \cdot cm^2$ or less in terms of power consumption.

6. Current Efficiency of Anion-Exchange Membrane

A two-chamber cell having the following configuration was used.

Anode (Pt plate) (aqueous 1.0 mol/L-sulfuric acid solution)/anion-exchange membrane/(aqueous 0.25 mol/L-sulfuric acid solution) cathode (Pt plate)

The cell was energized for 1 hour at a liquid temperature of 25°C at a current density of 10 A/dm$^2$, and the solution in cathode cell was collected. The concentrations of sulfuric acid in the collected solution and an initial solution were quantitatively determined by a potentiometric titrator (AT-710, manufactured by KYOTO ELECTRONICS MANUFACTURING CO., LTD.) using an aqueous sodium hydroxide solution, and the current efficiency was then calculated by the following equation.

$$\text{Current efficiency (\%)} = (CB - CS)/(I \times t/F) \times 100$$

In the equation,

CB: Concentration of initial solution;
CS: Concentration of collected solution after energizing;
I: Current value (A);
t: Energizing time (sec); and
F: Faraday constant (96500 C/mol).

7. Bursting Strength of Anion Exchange Membrane

The anion-exchange membrane was immersed in an aqueous 0.5 mol/l-NaCl solution for 4 hours or more, and then washed sufficiently with ion-exchange water. Subsequently, the bursting strength of the membrane was, without drying the membrane, measured by a mullen burst tester (manufactured by Toyo Seiki Seisaku-sho, Ltd.) in accordance with JIS-P8112.

<Example 1>

A mixture having the following composition was prepared.

To a mixture of 16.6 parts by mass of styrene (St),

16.8 parts by mass of divinylbenzene (DVB) (purity: 57%, the balance: ethylvinylbenzene),
66.6 parts by mass of chloromethyl styrene (CMS),
25.0 parts by mass of acetyl tributyl citrate (ATBC),
3.4 parts by mass of styreneoxide (StO), and
3.3 parts by mass of t-butyl peroxy-2-ethylhexanoate (BPE) (trade name: PERBUTYL O, manufactured by NOF CORPORATION),

20.7 parts by mass of styrene-butadiene triblock copolymer (trade name: TUFTEC M1913, manufactured by Asahi Kasei Corporation, the degree of modification by maleic anhydride = 2 mass%) which had a polystyrene content of 30 wt%, had been modified by maleic anhydride, and had been hydrogenated was added as a styrene-based thermoplastic resin elastomer, which was then stirred at 40°C for 20 hours, thereby obtaining a homogeneous polymerizable composition.

Subsequently, the following high-density polyethylene monofilament woven fabric (PE30D-100) was provided.

High-density polyethylene monofilament woven fabric (PE30D-100)
Warp: 100 mesh-fiber diameter of 68 $\mu$m (30 denier)
Weft: 100 mesh-fiber diameter of 68 $\mu$m (30 denier)
Thickness: 128 $\mu$m
Open area ratio: 54%

On the high-density polyethylene monofilament woven fabric (PE30D-100), the polymerizable composition obtained above was applied, both surfaces thereof were covered with polyester films as a release material, which was then polymerized at 70°C for 5 hours.

Subsequently, the resultant membranous polymer was immersed in methanol for 20 hours to remove a plasticizer and polymerization residues, and was then subjected to aminization reaction at 30°C for 16 hours using an aqueous solution containing 5 wt.% trimethylamine and 25 wt.% acetone, thereby obtaining an anion-exchange membrane. The characteristics of the resultant anion-exchange membrane are shown in Table 2. Table 1 shows the composition of the anion-exchange membrane.

Thickness: 159 $\mu$m
Ion-exchange capacity = 2.0 meq/g-dry mass
Water content: 34%
Electrical resistance: 1.7 $\Omega \cdot cm^2$
Water permeation rate: 0 ml/(m$^2 \cdot$hour)
Current efficiency: 44%
Bursting strength: 0.89 MPa

<Example 2>

The following polyethylene woven fabric (PE33D-100) was provided as the polyolefin-based monofilament substrate.

High-density polyethylene monofilament woven fabric (PE33D-100)
Warp: 100 mesh-fiber diameter of 76 $\mu$m (33 denier)
Weft: 100 mesh-fiber diameter of 76 $\mu$m (33 denier)
Thickness: 132 $\mu$m
Open area ratio: 49%

An anion-exchange membrane of the present invention was obtained in the same manner as in Example 1 except that the polyethylene woven fabric (PE33D-100) was used. Membrane characteristics of the resultant anion-exchange membrane are shown in Table 2.

<Example 3>

The following polyethylene woven fabric (PE33D-120) was provided as the polyolefin-based monofilament substrate.

High-density polyethylene monofilament woven fabric (PE33D-120)
Warp: 120 mesh-fiber diameter of 76 $\mu$m (33 denier)
Weft: 120 mesh-fiber diameter of 76 $\mu$m (33 denier)

Thickness: 132 μm
Open area ratio: 41%

An anion-exchange membrane of the present invention was obtained in the same manner as in Example 1 except that the polyethylene woven fabric (PE33D-120) was used. Membrane characteristics of the resultant anion-exchange membrane are shown in Table 2.

<Example 4>

The following polyethylene woven fabric (PE33D-130) was provided as the polyolefin-based monofilament substrate.
High-density polyethylene monofilament woven fabric (PE33D-130)
Warp: 130 mesh-fiber diameter of 76 μm (33 denier)
Weft: 130 mesh-fiber diameter of 76 μm (33 denier)
Thickness: 132 μm
Open area ratio: 37%

An anion-exchange membrane of the present invention was obtained in the same manner as in Example 1 except that the polyethylene woven fabric (PE33D-130) was used. Membrane characteristics of the resultant anion-exchange membrane are shown in Table 2.

<Example 5>

The following polypropylene woven fabric (PP30D-100) was provided as the polyolefin-based monofilament substrate.
High-density polypropylene monofilament woven fabric (PP30D-100)
Warp: 100 mesh-fiber diameter of 68 μm (30 denier)
Weft: 100 mesh-fiber diameter of 68 μm (30 denier)
Thickness: 128 μm
Open area ratio: 54%

An anion-exchange membrane of the present invention was obtained in the same manner as in Example 1 except that the polypropylene woven fabric (PP30D-100) was used. Membrane characteristics of the resultant anion-exchange membrane are shown in Table 2.

<Example 6>

A mixture having the following composition was prepared.
To a mixture of 24.9 parts by mass of styrene (St),

16.8 parts by mass of divinylbenzene (DVB) (purity: 57%, the balance: ethylvinylbenzene),
58.3 parts by mass of chloromethyl styrene (CMS),
25.0 parts by mass of acetyl tributyl citrate (ATBC),
3.4 parts by mass of styreneoxide (StO), and
3.3 parts by mass of t-butyl peroxy-2-ethylhexanoate (BPE) (trade name: PERBUTYL O, manufactured by NOF CORPORATION),
20.7 parts by mass of styrene-butadiene-styrene triblock copolymer (trade name: TUFTEC M1913, manufactured by Asahi Kasei Corporation, the degree of modification by maleic anhydride = 2 mass%) which had a polystyrene content of 30 mass%, had been modified by maleic anhydride, and had been hydrogenated was added as a styrene-based thermoplastic resin elastomer, which was then stirred at 40°C for 20 hours in the same manner as in Example 1, thereby obtaining a homogeneous polymerizable composition.

Subsequently, the high-density polyethylene monofilament woven fabric (PE33D-120) used in Example 3 was provided as polyolefin-based woven fabric, and an anion-exchange membrane of the present invention was obtained in the same manner as in Example 1 using the polymerizable composition above. Membrane characteristics of the resultant anion-exchange membrane are shown in Table 2.

<Example 7>

An anion-exchange membrane of Example 7 was prepared in the same manner as in Example 6 except that an unmodified product of the styrene-butadiene-styrene triblock copolymer (trade name: TUFTEC H1041, manufactured by Asahi Kasei Corporation) was used as the styrene-based thermoplastic resin elastomer. Membrane characteristics of the resultant anion-exchange membrane are shown in Table 2.

<Example 8>

A mixture having the following composition was prepared.
To a mixture of 33.2 parts by mass of styrene (St),

16.8 parts by mass of divinylbenzene (DVB) (purity: 57%, the balance: ethylvinylbenzene),
50.0 parts by mass of chloromethyl styrene (CMS),
25.0 parts by mass of acetyl tributyl citrate (ATBC),
3.4 parts by mass of styreneoxide (StO), and
3.3 parts by mass of t-butyl peroxy-2-ethylhexanoate (BPE) (trade name: PERBUTYL O, manufactured by NOF CORPORATION),
20.7 parts by mass of styrene-butadiene-styrene triblock copolymer (trade name: TUFTEC M1913, manufactured by Asahi Kasei Corporation, the degree of modification by maleic anhydride = 2 mass%) which had a polystyrene content of 30 mass%, had been modified by maleic anhydride, and had been hydrogenated was added as a styrene-based thermoplastic resin elastomer, which was then stirred at 40°C for 20 hours in the same manner as in Example 1, thereby obtaining a homogeneous polymerizable composition.

Subsequently, the high-density polyethylene monofilament woven fabric (PE33D-120) used in Example 3 was provided as polyolefin-based woven fabric, and an anion-exchange membrane of the present invention was obtained in the same manner as in Example 1 using the polymerizable composition. Membrane characteristics of the resultant anion-exchange membrane are shown in Table 2.

<Comparative Example 1>

The following polyethylene woven fabric (PE33D-80) was provided as the polyolefin-based monofilament substrate.
High-density polyethylene monofilament woven fabric (PE33D-80)
Warp: 80 mesh-fiber diameter of 76 $\mu$m (33 denier)
Weft: 80 mesh-fiber diameter of 76 $\mu$m (33 denier)
Thickness: 130 $\mu$m
Open area ratio: 58%

An anion-exchange membrane of the present invention was obtained in the same manner as in Example 1 except that the polyethylene woven fabric (PE33D-80) was used. Membrane characteristics of the resultant anion-exchange membrane are shown in Table 2.
The water permeation rate of Comparative Example 1 was greatly deteriorated as compared with those of Examples. It was confirmed by this result that the excessively large open area ratio of the substrate caused deterioration in adhesion of the substrate with the resin.

<Comparative Example 2>

The following polyethylene woven fabric (PE200) was provided as the polyolefin-based monofilament substrate.
High-density polyethylene monofilament woven fabric (PE200)
Warp: 156 mesh-fiber diameter of 86 $\mu$m (50 denier)

Weft: 100 mesh-fiber diameter of 86 μm (50 denier)
Thickness: 185 μm
Open area ratio: 32%

An anion-exchange membrane of the present invention was obtained in the same manner as in Example 1 except that the polyethylene woven fabric (PE200) was used. Membrane characteristics of the resultant anion-exchange membrane are shown in Table 2.
The resistance of Comparative Example 2 was deteriorated as compared with those of Examples. It was confirmed by this result that if the open area ratio of the substrate was excessively small, a membrane having a desirably low resistance could not be obtained.

<Comparative Example 3>

The following polyethylene woven fabric (PE120) was provided as the polyolefin-based monofilament substrate.
High-density polyethylene monofilament woven fabric (PE120)
Warp: 96 mesh-fiber diameter of 106 μm (62 denier)
Weft: 76 mesh-fiber diameter of 122 μm (71 denier)
Thickness: 260 μm
Open area ratio: 38%

An anion-exchange membrane of the present invention was obtained in the same manner as in Example 1 except that the polyethylene woven fabric (PE120) was used. Membrane characteristics of the resultant anion-exchange membrane are shown in Table 2.
The resistance of Comparative Example 3 was deteriorated as compared with those of Examples. It was confirmed by this result that if the substrate was excessively thick, a membrane having a desirably low resistance could not be obtained.

<Comparative Example 4>

An anion-exchange membrane of the present invention was obtained in the same manner as in Example 3 except that the polymerization temperature was 105°C. Membrane characteristics of the resultant anion-exchange membrane are shown in Table 2.
The bursting strength of Comparative Example 4 was deteriorated as compared with those of Examples. It was confirmed by this result that if the polymerization temperature was excessively high, a membrane having a desirably high strength could not be obtained.

[Table 1]

| Ex. | Composition of Polymerizable Composition (parts by mass) | | | | | | | | | | | | | Polymerization Temperature |
| --- | --- | --- | --- | --- | --- | --- | --- | --- | --- | --- | --- | --- | --- | --- |
| | Monomer for Introducing Exchange Group | | Cross-Linkable Monomer | | Other Monomers | | Elastomer | | Other Additives | | Polymerization Initiator | | | |
| | Type | Amount Blended | Type | Amount Blended | Type | Amount Blended | Type | Amount Blended | Type | Amount Blended | Type | Amount Blended | | °C |
| 1 | CMS | 66.6 | DVB | 16.8 | St | 16.6 | SEBS (1) | 20.7 | ATBC StO | 25.0 3.4 | BPE | 3.3 | | 70 |
| 2 | CMS | 66.6 | DVB | 16.8 | St | 16.6 | SEBS (1) | 20.7 | ATBC StO | 25.0 3.4 | BPE | 3.3 | | 70 |
| 3 | CMS | 66.6 | DVB | 16.8 | St | 16.6 | SEBS (1) | 20.7 | ATBC StO | 25.0 3.4 | BPE | 3.3 | | 70 |
| 4 | CMS | 66.6 | DVB | 16.8 | St | 16.6 | SEBS (1) | 20.7 | ATBC StO | 25.0 3.4 | BPE | 3.3 | | 70 |
| 5 | CMS | 66.6 | DVB | 16.8 | St | 16.6 | SEBS (1) | 20.7 | ATBC StO | 25.0 3.4 | BPE | 3.3 | | 70 |
| 6 | CMS | 58.3 | DVB | 16.8 | St | 24.9 | SEBS (1) | 20.7 | ATBC StO | 25.0 3.4 | BPE | 3.3 | | 70 |
| 7 | CMS | 58.3 | DVB | 16.8 | St | 24.9 | SEBS (2) | 20.7 | ATBC StO | 25.0 3.4 | BPE | 3.3 | | 70 |
| 8 | CMS | 50.0 | DVB | 16.8 | St | 33.2 | SEBS (1) | 20.7 | ATBC StO | 25.0 3.4 | BPE | 3.3 | | 70 |
| Comp. Ex. 1 | CMS | 66.6 | DVB | 16.8 | St | 16.6 | SEBS (1) | 20.7 | ATBC StO | 25.0 3.4 | BPE | 3.3 | | 70 |
| Comp. Ex. 2 | CMS | 66.6 | DVB | 16.8 | St | 16.6 | SEBS (1) | 20.7 | ATBC StO | 25.0 3.4 | BPE | 3.3 | | 70 |
| Comp. | CMS | 66.6 | DVB | 16.8 | St | 16.6 | SEBS (1) | 20.7 | ATBC StO | 25.0 3.4 | BPE | 3.3 | | 70 |

(continued)

| | CMS | DVB | St | SEBS (1) | ATBC StO | BPE | |
|---|---|---|---|---|---|---|---|
| Ex. 3 | | | | | | | |
| Comp. Ex. 4 | 66.6 | 16.8 | 16.6 | 20.7 | 25.0 3.4 | 3.3 | 105 |

• CMS: chloromethyl styrene
• DVB: divinylbenzene (purity: 57%, balance: ethylvinylbenzene)
• St: styrene
• SEBC (1): maleic anhydride-modified, hydrogenated styrene-butadiene triblock copolymer, polystyrene content: 30 wt.% (trade name: TUFTEC M1913, manufactured by Asahi Kasei Corporation)
• SEBC (2): unmodified, hydrogenated styrene-butadiene triblock copolymer, polystyrene content: 30 wt.% (trade name: TUFTEC H1041, manufactured by Asahi Kasei Corporation)
• ATBC: acetyl tributyl citrate
• StO: styreneoxide
• BPE: tert-butyl peroxy-2-ethylhexanoate (trade name: PERBUTYL O, manufactured by NOF CORPORATION)

[Table 2]

| Ex. | Substrate | Characteristics of Substrate | | Characteristics of Anion-exchange Membrane | | | | | | | |
|---|---|---|---|---|---|---|---|---|---|---|---|
| | | Thickness ($\mu$m) | Open Area Ratio [%] | Thickness ($\mu$m) | Electrical Resistance [$\Omega \cdot cm^2$] | Ion-Exchange Capacity [meq/g-dry mass] | Water Content [%] | Water Permeation Rate | Water Permeation Rate [80°C Acceleration] | Current Efficiency [%] | Bursting Strength [MPa] |
| | | | | | | | | [ml/(m2·hr)] | | | |
| 1 | PE30D-100 | 128 | 54 | 159 | 1.7 | 2.0 | 34 | 0 | - | 44 | 0.89 |
| 2 | PE33D-100 | 132 | 49 | 185 | 1.6 | 2.0 | 36 | 8 | - | 42 | 0.90 |
| 3 | PE33D-120 | 132 | 41 | 181 | 1.8 | 1.7 | 33 | 8 | - | 43 | 1.04 |
| 4 | PE33D-130 | 132 | 37 | 187 | 1.9 | 1.8 | 34 | 0 | - | 41 | 1.12 |
| 5 | PP30D-100 | 128 | 54 | 168 | 1.6 | 2.1 | 36 | 6 | - | 42 | 0.79 |
| 6 | PE33D-120 | 132 | 41 | 191 | 2.0 | 1.7 | 37 | 12 | 21 | 43 | 0.93 |
| 7 | PE33D-120 | 132 | 41 | 210 | 1.9 | 1.7 | 45 | 12 | > 100000 | 42 | 1.10 |
| 8 | PE33D-120 | 132 | 41 | 176 | 2.3 | 1.3 | 28 | 8 | 25 | 43 | 1.10 |
| Comp. Ex. 1 | PE33D-80 | 130 | 58 | 175 | 1.5 | 2.1 | 35 | > 100000 | - | <0 | 0.71 |
| Comp. Ex. 2 | PE200 | 185 | 32 | 256 | 2.6 | 1.8 | 37 | 12 | - | 45 | 1.15 |
| Comp. Ex. 3 | PE120 | 260 | 38 | 395 | 3.3 | 1.8 | 43 | 99 | - | 38 | 1.65 |

(continued)

| Ex. | Substrate | Characteristics of Substrate | | Characteristics of Anion-exchange Membrane | | | | | | | |
|---|---|---|---|---|---|---|---|---|---|---|---|
| | | Thickness (μm) | Open Area Ratio [%] | Thickness (μm) | Electrical Resistance [Ω·cm²] | Ion-Exchange Capacity [meq/g-dry mass] | Water Content [%] | Water Permeation Rate | Water Permeation Rate [80°C Acceleration] | Current Efficiency [%] | Bursting Strength [MPa] |
| | | | | | | | | | [ml/(m2·hr)] | | |
| Comp. Ex. 4 | PE33D-120 | 132 | 41 | 177 | 2.8 | 1.8 | 28 | 1 | - | 46 | 0.31 |

• PE30D-100: high-density polyethylene monofilament woven fabric, warp: 100 mesh-fiber diameter of 68 μm (30 denier), weft: 100 mesh-fiber diameter of 68 μm (30 denier)
• PE33D-100: high-density polyethylene monofilament woven fabric, warp: 100 mesh-fiber diameter of 76 μm (33 denier), weft: 100 mesh-fiber diameter of 76 μm (33 denier)
• PE33D-120: high-density polyethylene monofilament woven fabric, warp: 120 mesh-fiber diameter of 76 μm (33 denier), weft: 120 mesh-fiber diameter of 76 μm (33 denier)
• PE33D-130: high-density polyethylene monofilament woven fabric, warp: 130 mesh-fiber diameter of 76 μm (33 denier), weft: 130 mesh-fiber diameter of 76 μm (33 denier)
• PP30D-100: high-density polypropylene monofilament woven fabric, warp: 100 mesh-fiber diameter of 68 μm (30 denier), weft: 100 mesh-fiber diameter of 68 μm (30 denier)
• PE33D-80: high-density polyethylene monofilament woven fabric, warp: 80 mesh-fiber diameter of 76 μm (33 denier), weft: 80 mesh-fiber diameter of 76 μm (33 denier)
• PE200: high-density polyethylene monofilament woven fabric, warp: 156 mesh-fiber diameter of 86 μm (50 denier), weft: 100 mesh-fiber diameter of 86 μm (50 denier)
• PE120: high-density polyethylene monofilament woven fabric, warp: 96 mesh-fiber diameter of 106 μm (62 denier), weft: 76 mesh-fiber diameter of 122 μm (71 denier)

The anion-exchange membrane produced in Example 6 had an electrical resistance of 3.0 $\Omega\cdot\text{cm}^2$ or less, which was sufficiently low, and a water permeation rate of 12 ml/(m$^2$ × hr), which was excellent, and further had a water permeation rate of 21 ml/(m$^2$ × hr) even after an accelerated test at 80°C. This is considered to be because the anion-exchange membrane produced in Example 6 contains, as a styrene-based thermoplastic resin elastomer, a modified product modified by maleic anhydride. In contrast, the anion-exchange membrane produced in Example 7 had a water permeation rate obtained by a normal test of 12 ml/(m$^2$ × hr) as in Example 6, but had a water permeation rate of 100,000 ml/(m$^2$ × hr) or more after the accelerated test at 80°C, which was very large. The reason of this result is considered to be because the styrene-based thermoplastic resin elastomer used in the anion-exchange membrane produced in Example 7 is not acid-modified. It was confirmed by these results that modified product modified by the maleic anhydride and used as the styrene-based thermoplastic resin elastomer caused improvement in adhesion between the anion-exchange resin and the polyolefin-based substrate in the resultant anion-exchange membrane.

(Other Embodiments)

The above embodiments are examples of the invention of the present application, and the invention of the present application is not limited to these examples, and may be combined with or partially replaced with well-known, conventional, and publicly known techniques. Variations readily apparent to those skilled in the art are also included in the invention of the present application.

**Claims**

1. An anion-exchange membrane comprising: a substrate made of polyolefin-based woven fabric; and an anion-exchange resin, the anion-exchange membrane having

   an electrical resistance measured using 0.5M NaCl solution at 25°C of 1.0 $\Omega\cdot\text{cm}^2$ or more to 2.5 $\Omega\cdot\text{cm}^2$ or less,
   a bursting strength of 0.7 MPa or more to 1.2 MPa or less,
   a water permeation rate measured using pressured water at 0.1 MPa of 300 ml/(m$^2\cdot$hr) or less,
   a thickness of the substrate of 90 $\mu$m or more to 160 $\mu$m or less, and
   an open area ratio of the substrate of 35% or more to 55% or less.

2. The anion-exchange membrane of claim 1, wherein
   the substrate is made of polyethylene-based woven fabric.

3. The anion-exchange membrane of claim 1 or 2, wherein
   the substrate is made of monofilament woven fabric of polyolefin.

4. The anion-exchange membrane of any one of claims 1 to 3, having a current efficiency measured for sulfate ions of 40% or more, the current efficiency being measured after energizing a two-chamber cell having a configuration of anode (Pt plate) (1.0 mol/L aqueous sulfuric acid solution)/anion-exchange membrane/(0.25 mol/L aqueous sulfuric acid solution) cathode (Pt plate) and used as an electrolytic cell, for 1 hour at a liquid temperature of 25°C at a current density of 10 A/dm$^2$.

5. The anion-exchange membrane of any one of claims 1 to 4, wherein
   the anion-exchange resin contains a modified styrene-based thermoplastic resin elastomer modified by a polar group.

6. The anion-exchange membrane of claim 5, wherein
   the polar group is an acidic group or an acid anhydride group.

7. The anion-exchange membrane of claim 6, wherein
   the acidic group is a carboxy group, and the acid anhydride group is a carboxylic acid anhydride group.

8. The anion-exchange membrane of claim 6 or 7, wherein
   the modified styrene-based thermoplastic resin elastomer modified by the acidic group or the acid anhydride group is a modified product obtained by modifying a polystyrene-poly(conjugated diolefin)-polystyrene copolymer or modifying a hydrogenated product thereof by the acidic group.

9. The anion-exchange membrane of claim 8, wherein

the polystyrene-poly(conjugated diolefin)-polystyrene copolymer is a polystyrene-polybutadiene-polystyrene copolymer.

10. The anion-exchange membrane of any one of claims 1 to 9, wherein
the anion-exchange resin is a polystyrene-based anion-exchange resin.

11. The anion-exchange membrane of any one of claims 1 to 10, wherein
the anion-exchange resin has a crosslinked structure.

12. A method of producing an anion-exchange membrane, the method comprising:

immersing a polymerizable composition for forming an anion-exchange resin in a substrate made of polyolefin-based woven fabric having a thickness of 90 μm or more to 160 μm or less, and an open area ratio of 35% or more to 55% or less, the polymerizable composition containing a polymerization initiator and a monomer component which contains a cross-linkable monomer and a monomer having an anion-exchange group-introducible functional group or an anion-exchange group; and
copolymerizing the monomer component at 40°C or more to less than 80°C after the immersing.

13. The method of claim 12, wherein
the substrate is made of polyethylene-based woven fabric.

14. The method of claim 12 or 13, wherein
the polymerizable composition for forming the anion-exchange resin contains the polymerization initiator having a 10-hour half-life decomposition temperature of 90°C or less.

15. The method of any one of claims 12 to 14, wherein
the monomer containing the anion-exchange group-introducible functional group or the anion-exchange group is a styrene-based monomer containing an anion-exchange group-introducible functional group or an anion-exchange group.

## INTERNATIONAL SEARCH REPORT

International application No.

PCT/JP2021/010184

### A. CLASSIFICATION OF SUBJECT MATTER
Int.Cl. C08J5/22(2006.01)i, B01J41/13(2017.01)i, B01J47/12(2017.01)i, C02F1/469(2006.01)i
FI: C08J5/22105, B01J41/13, B01J47/12, C02F1/469, C08J5/22CET
According to International Patent Classification (IPC) or to both national classification and IPC

### B. FIELDS SEARCHED
Minimum documentation searched (classification system followed by classification symbols)
Int.Cl. C08J5/22, B01J41/13, B01J47/12, C02F1/469

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 53-41200 B1 (ASAHI KASEI KOGYO CO., LTD.) 31 October 1978 (1978-10-31), claims, page 2, right column, line 8 to page 3, left column, line 38, page 3, right column, line 43 to page 7, left column, line 8, examples | 1-4, 10-15<br>5-9 |
| Y | JP 06-329815 A (TOKUYAMA CORPORATION) 29 November 1994 (1994-11-29), claims, paragraphs [0005], [0008]-[0052], examples | 5-9 |
| A | JP 09-052968 A (TOKUYAMA CORPORATION) 25 February 1997 (1997-02-25), claims, examples, entire text | 1-15 |
| A | WO 2012/133538 A1 (ASTOM CORPORATION) 04 October 2012 (2012-10-04), claims, examples, entire text | 1-15 |
| A | JP 2009-144041 A (THE SALT INDUSTRY CENTER OF JAPAN) 02 July 2009 (2009-07-02), claims, examples, entire text | 1-15 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 April 2021 | Date of mailing of the international search report<br>18 May 2021 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2021/010184

| | | |
|---|---|---|
| JP 53-41200 B1 | 31 October 1978 | US 3759738 A<br>claims, column 3, line 1 to<br>column 4, line 5,<br>column 5, line 7 to<br>column 10, line 27,<br>examples<br>GB 1301187 A<br>DE 2020518 A<br>FR 2040262 A<br>NL 7006029 A |
| JP 06-329815 A | 29 November 1994 | (Family: none) |
| JP 09-052968 A | 25 February 1997 | (Family: none) |
| WO 2012/133538 A1 | 04 October 2012 | JP 2012-207095 A<br>US 9162185 B2<br>claims, examples<br>JP 4979824 B1<br>EP 2692782 A1<br>CN 103443172 A<br>KR 10-2014-0016914 A |
| JP 2009-144041 A | 02 July 2009 | (Family: none) |

Form PCT/ISA/210 (patent family annex) (January 2015)

**REFERENCES CITED IN THE DESCRIPTION**

**Patent documents cited in the description**

- JP H6322156 A

- JP H3153740 A